# EUROPÄISCHE PATENTSCHRIFT

(11) **EP 1 454 284 B1**
(45) Veröffentlichungstag und Bekanntmachung des Hinweises auf die Patenterteilung: **02.04.2008**
(21) Anmeldenummer: 02794967.6
(22) Anmeldetag: 02.12.2002
(51) Int. Cl.: G06K 7/00, G06K 7/10, G06K 17/00

(54) **VERFAHREN UND VORRICHTUNG ZUM UNI- ODER BIDIREKTIONALEN ÜBERMITTELN VON DATEN**
METHOD AND DEVICE FOR ONE-WAY OR TWO-WAY DATA TRANSMISSION
PROCEDE ET DISPOSITIF POUR TRANSMETTRE DES DONNEES DE MANIERE UNIDIRECTIONNELLE OU BIDIRECTIONNELLE

(30) Priorität: 04.12.2001 DE 10159290; 05.03.2002 DE 10209501
(43) Veröffentlichungstag der Anmeldung: 08.09.2004
(73) Patentinhaber: Ilic, Gregor, 64287 Darmstadt (DE)
(72) Erfinder: Ilic, Gregor, 64287 Darmstadt (DE)
(74) Vertreter: Fleuchaus, Andrea
(86) Internationale Anmeldenummer: PCT/DE2002/004416
(87) Internationale Veröffentlichungsnummer: WO 2003/049008

(56) Entgegenhaltungen:
- WO-A-00/77717
- WO-A-99/46722
- DE-U- 29 518 675

## Beschreibung

Die Erfindung betrifft ein Verfahren sowie eine Vorrichtung zum uni- oder bidirektionalen Übermitteln von Daten zwischen mindestens zwei Geräten, wobei das eine Gerät die Daten sendet - erstes Gerät - und das andere Gerät die Daten empfängt - zweites Gerät - und wobei die Geräte mittels einer Übermittlungseinrichtung verbunden sind.

Verfahren und Vorrichtungen zum uni- oder bidirektionalen Übermitteln von Daten zwischen mindestens zwei Geräten sind seit längerem in der Praxis bekannt. Beispielsweise ist aus der DE 295 18 675 U1 ein Verfahren und eine Vorrichtung zum unidirektionalen Übermitteln von Daten zwischen zwei Geräten bekannt, wobei es sich bei dem einen Gerät um einen Barcode-Scanner und bei dem anderen Gerät um ein Mobiltelefon handelt. Die Übermittlungseinrichtung ist als Modul ausgestaltet, in das der Barcode-Scanner zum Übermitteln von Daten eingeführt wird und das mittels eines Kabels und eines Anschlusssteckers an ein Mobiltelefon angeschlossen wird. Mittels des Barcode-Scanners werden hierbei Daten aus einem Barcode ausgelesen. Nachdem der Barcode-Scanner in die Übermittlungseinrichtung eingeführt ist, werden die Daten über ein Kabel, das mittels eines Anschlusssteckers an dem Mobiltelefon angeschlossen ist, an das Mobiltelefon übermittelt.

Bei dem bekannten Verfahren und der bekannten Vorrichtung ist nachteilig, dass die Übermittlungseinrichtung ausschließlich mit zwei definierten Geräten verwendbar ist. So ist es beispielsweise nicht möglich, die Übermittlungseinrichtung mit anderen Geräten als diesem speziellen Barcode-Scanner und diesem speziellen, durch den Stecker definierten Mobiltelefon zu betreiben, da die Übermittlungseinrichtung zum einen nur für das Format dieser speziellen Daten bzw. die Übermittlung des Datenformats dieser speziellen Geräte ausgelegt ist und zum anderen durch ihre definierte Ausgestaltung kein Anschluss anderer Geräte möglich ist. Für unterschiedliche Anwendungsgebiete und Aufgaben muss somit jeweils ein andere Übermittlungseinrichtung verwendet werden. Dies ist durch das notwendige Mitführen von verschiedenen Übermittlungseinrichtungen unkomfortabel und dadurch, dass für jede Aufgabe jeweils eine eigene Übermittlungseinrichtung vorhanden sein muss, teuer.

WO 99/46722 A1 betrifft ein Verfahren und eine Vorrichtung zur drahtlosen Übermittlung von Daten zwischen Datenträgern in Form von Radiofrequenztranspondern oder Smartcards und entsprechenden Lesern, sowie damit verbundenen Datenverarbeitungsanlagen, bei welchem das Datenträgerlesegerät im wesentlichen kontinuierlich Abfrage-Pakete aussendet, wobei dies auf allen Übertragungsfrequenzen bzw. mit allen Übertragungsprotokollen geschieht, welche im Rahmen der Spezifikationen der unterschiedlichen Datenträger bekannt sind. Für den Fall, dass das Datenträgerlesegerät auf die Aussendung eines Abfrage-Paketes mit einer ersten Übertragungsfrequenz und einem ersten Übertragungsprotokoll keine Antwort empfängt, wird mit der Aussendung weiterer Abfrage-Pakete mit geänderten Übertragungsfrequenzen bzw. Übertragungsprotokollen fortgefahren.

Der vorliegenden Erfindung liegt vor diesem Hintergrund die Aufgabe zugrunde, ein Verfahren sowie eine Vorrichtung zum uni- oder bidirektionalen Übermitteln von Daten der eingangs genannten Art anzugeben, wonach ein komfortabler und universeller Einsatz ermöglicht ist.

Erfindungsgemäß wird die voranstehende Aufgabe hinsichtlich eines Verfahrens zum uni- oder bidirektionalen Übermitteln von Daten durch ein Verfahren mit den Merkmalen des Patentanspruchs 1 gelöst. Danach ist ein Verfahren zum uni- oder bidirektionalen Übermitteln von Daten der eingangs genannten Art derart ausgestaltet, dass die Übermittlungseinrichtung mindestens eines der Geräte erkennt und/oder einen kompatiblen Datenaustausch der Geräte ermöglicht.

Des Weiteren ist die obige Aufgabe im Hinblick auf eine Vorrichtung zum uni- oder bidirektionalen Übermitteln von Daten durch eine Vorrichtung mit den Merkmalen des Patentanspruchs 15 gelöst. Danach ist eine Vorrichtung zum uni- oder bidirektionalen Übermitteln von Daten der eingangs genannten Art derart ausgestaltet, dass die Übermittlungseinrichtung mindestens eines der Geräte erkennt und/oder dass die Übermittlungseinrichtung einen kompatiblen Datenaustausch der Geräte ermöglicht.

In erfindungsgemäßer Weise ist erkannt worden, dass zur komfortablen und universellen Nutzung eines Verfahrens und einer Vorrichtung zum Übermitteln von Daten die Übermittlungseinrichtung mit einer Vielzahl von Geräten einsetzbar sein muss. Dies wird erfindungsgemäß dadurch ermöglicht, dass die Übermittlungseinrichtung die Geräte erkennt und sodann die Daten in der Form modifizieren kann, dass ein kompatibler Datenaustausch der Geräte ermöglicht ist. Hierdurch ist es möglich verschiedenste Geräte miteinander zu koppeln, ohne das jeweils eine andere Übermittlungseinrichtung verwendet werden muss.

Hinsichtlich einer besonders einfachen Ausgestaltung könnte die Übermittlungseinrichtung zum Erkennen des Geräts das Gerät auslesen und/oder mindestens einen Befehl, insbesondere einen Attention-Befehl, senden. Mittels des Attention-Befehls könnte dann beispielsweise das angesprochene Gerät einen Rückgabewert an die Übermittlungseinrichtung senden, so dass die Übermittlungseinrichtung mittels des Rückgabewerts auf den Attention-Befehl das Gerät erkennt. Die Übermittlungseinrichtung könnte sodann das Format der Daten an den jeweiligen Gerätetyp anpassen, so dass eine problemlose Kommunikation zwischen der Übermittlungseinrichtung und den einzelnen Geräten und somit auch zwischen den Geräten selbst ermöglicht ist. Es wäre allerdings auch möglich, dass die Übermittlungseinrichtung eine Vielzahl unterschiedlicher Befehle, Zeichenfolgen, Signale oder dergleichen zum Erkennen des Geräts sendet, wobei das Gerät nur auf einzelne Befehle bzw. Zeichenfolgen oder Signale einen Rückgabewert ausgibt. Die Übermittlungseinrichtung würde so mittels "Trial and Error" den richtigen Befehl bzw. die richtige Zeichenfolge oder das richtige Signal, um das Gerät erkennen zu können, ermitteln.

Das erkannte Gerät könnte dann mittels der Übermittlungseinrichtung initialisiert werden. Die Initialisierung könnte beinhalten, dass automatisch ein Eingabefenster generiert wird, beispielsweise eine SMS-Nachricht - Short Message Service-Nachricht, wenn das Gerät z.B. ein Mobiltelefon ist, und dass die übermittelten Daten in das Eingabefenster bzw. SMS-Nachricht integriert werden. Die Initialisierung könnte hierbei soweit gehen, dass die Daten beispielsweise durch eine Telefonnummer, an welche die Nachricht versendet werden soll, ergänzt werden und somit nur noch bei Bedarf eine Ergänzung der Daten nötig ist. Dies wäre besonders benutzerfreundlich. Analog ließe sich die Initialisierung auch bei einem Computer, insbesondere einem Laptop oder einem PDA - Personal Digital Assistant - in Bezug auf eine E-Mail durchführen.

Das erste Gerät könnte Daten erfassen und/oder speichern und/oder wiedergeben. Diese Daten könnten dabei beispielsweise in Form eines Barcodes, vorzugsweise im EAN-Format, aber auch in jedweder anderen maschinenlesbaren Format vorliegen. Dadurch wäre abermals ein besonders universeller Einsatz möglich. Das erste Gerät könnte dann die Daten an die Übermittlungseinrichtung senden. Hierbei wäre es beispielsweise auch möglich, dass die Übermittlungseinrichtung anhand des Datenformats den Gerätetyp des ersten Geräts erkennt.

Hinsichtlich einer besonders einfach handhabbaren Ausgestaltung könnte die Übermittlungseinrichtung die Daten, insbesondere durch eine IP-Adresse - Internet Protocol-Adresse - und/oder eine Telefonnummer und/oder eine E-Mail-Adresse oder dergleichen, ergänzen. Es könnten allerdings auch jedwede anderen Daten ergänzt werden. In weiter vorteilhafter Weise könnten die Daten mit weiteren Daten aus einer Datenbank verknüpft werden. Die Ergänzung und/oder die Verknüpfung der Daten könnte dabei in Echtzeit erfolgen, um eine besonders komfortable Ausgestaltung zu gewährleisten. Die Daten könnten zusätzlich oder alternativ auch durch eine eindeutige Identifikationsnummer, die vorzugsweise in der Übermittlungseinrichtung gespeichert ist, ergänzt werden. Diese Identifikationsnummer würde eine eindeutige Zuordnung der Daten zu einem bestimmten Benutzer und/oder bestimmten Geräten ermöglichen. Hierdurch wäre beispielsweise eine Abrechnung von Dienstleistungen ermöglicht.

Die Übermittlungseinrichtung könnte die Daten dann in für das zweite Gerät lesbare Daten umwandeln und/oder speichern und/oder die Daten an das zweite Gerät senden. Es wäre dabei beispielsweise auch möglich, dass die Initialisierung des zweiten Geräts mit dem Senden der Daten verknüpft ist.

Im Rahmen einer besonders benutzerfreundlichen Ausgestaltung könnte das zweite Gerät die Daten, beispielsweise per SMS, per WAP - Wireless Application Protocol, E-Mail oder dergleichen, an eine Einrichtung, beispielsweise eine Datenverarbeitungseinrichtung wie ein Server-Client-System, eine IP-Adresse oder dergleichen, übermitteln. Die Art der Datenübertragung könnte hierbei in der Übermittlungseinrichtung gespeichert werden. Die Art der Datenübertragung könnte dabei abhängig von dem jeweils erkannten Gerät gespeichert sein. In der Übermittlungseinrichtung könnte also gespeichert sein, welches Übertragungsmedium bei welchem zweiten Gerät gewählt wird. So wäre es beispielsweise denkbar, dass die Übermittlungseinrichtung erkennt, ob ein Mobiltelefon eine Übertragung mittels WAP ermöglicht. Ist dies der Fall, so wäre das Übertragungsmedium WAP. Unterstützt das Mobiltelefon das WAP nicht, dann würde als Übertragungsmedium eine SMS-Nachricht gewählt. So würde für jedes zweite Gerät ein optimales Übertragungsmedium gewählt.

Der Verbindungsaufbau könnte per Mobiltelefon und/oder PDA und/oder Modem oder dergleichen erfolgen. Die Datenübertragung könnte dann mittels WAP und/oder HTTP - Hyper Text Transfer Protocol - und/oder HTTPS - Hyper Text Transfer Protocol Secure - und/oder SMTP - Simple Mail Transfer Protocol - und/oder FTP - File Transfer Protocol - oder dergleichen erfolgen. Es könnte aber auch jedwedes andere Protokoll, beispielsweise POP - Post Office Protocol - und IMAP - Internet Message Access Protocol, zur Datenübertragung verwendet werden.

Die Daten könnten dann ausgewertet und/oder durch Informationen ergänzt werden. Dies wäre zum Beispiel in der Art möglich, dass die Daten von der Einrichtung an einen Client übermittelt werden und mittels des Clients eine Auswertung erfolgt. Die Daten und/oder die Informationen könnten dann von der Einrichtung wiederum an das zweite Gerät, vorzugsweise mittels des gleichen Übertragungsmediums, übermittelt werden, so dass einem Benutzer die Daten und/oder die Informationen quasi automatisiert und innerhalb kürzester Zeit zur Verfügung stehen. Die Daten und/oder die Informationen könnten beispielsweise Produkte und/oder Produkttypen und/oder Preisinformationen oder dergleichen umfassen.

Die erfindungsgemäße Vorrichtung zum uni- oder bidirektionalen Übermitteln von Daten könnte insbesondere zur Anwendung des Verfahrens gemäß den obigen Ausführungen dienen. Bei dieser Vorrichtung ist vorteilhaft, dass verschiedenste Geräte mit ein und derselben Übermittlungseinrichtung verbunden werden können.

Im Hinblick auf eine besonders flexible Ausgestaltung könnte das erste Gerät eine Kamera und/oder ein MP3-Player und/oder ein Scanner, insbesondere ein Barcode-Scanner, und/oder ein GPS-System und/oder ein Autoradio und/oder ein portables Messsystem und/oder ein Kartenlesesystem sein. Es könnten allerdings auch jede Art von Gerät verwendet werden, mit dem Daten erfasst und/oder gespeichert und/oder wiedergegeben werden kann, beispielsweise auch eine Vorrichtung zum Auslesen von Transpondern. Komplementär dazu könnte das zweite Gerät ein PDA und/oder ein Computer, insbesondere ein Laptop, und/oder ein Mobiltelefon sein. Es könnte allerdings auch jedwedes andere Gerät, mit dem Daten übertragen werden können, verwendet werden.

Im Rahmen von besonders flexiblen Einsatzmöglichkeiten könnte die Übermittlungseinrichtung als ein von den Geräten unabhängiges Modul ausgestaltet sein. Alternativ hierzu könnte die Übermittlungseinrichtung aber auch integraler Bestandteil eines Kabels oder eines der Geräte sein. Dies wäre von Vorteil, da kein zusätzliches Modul mitgeführt werden muss, was oft platzraubend ist und welches unterwegs leicht verloren gehen kann.

Hinsichtlich einer besonders einfachen Ausgestaltung könnte die Übermittlungseinrichtung die Geräte mittels Kabeln verbinden. Die Kabel könnten hierbei seitens der Übermittlungseinrichtung austauschbar sein, so dass die Kabel an die jeweils verwendeten Geräte angepasst werden können. Ist die Übermittlungseinrichtung an einen Computer, insbesondere an einen Laptop, angeschlossen, so könnte dieses mittels einer PCMCIA-Karte erfolgen. Auch wäre es möglich die Übermittlungseinrichtung mittels eines USB - Universal Serial Bus - bzw. mittels der USB-Technik mit den Geräten zu verbinden. Zusätzlich oder alternativ könnte die Übermittlungseinrichtung die Geräte auch mittels einer Funkverbindung und/oder einer Infrarotverbindung oder dergleichen verbinden. Es wäre aber auch jedwede andere drahtlose Übertragung denkbar.

Im Hinblick auf eine besonders hohe Benutzerfreundlichkeit könnte die Übermittlungseinrichtung Anzeige- und/oder Bedienelemente aufweisen. Diese könnten in Form eines Displays und/oder LEDs - Light Emitting Diodes - sowie einer Tastatur, Schaltern oder anderen Bedienelementen vorliegen. Es könnte auch ein Touchscreen zur Interaktion mit dem Benutzer vorgesehen sein. Mittels der Bedienelemente könnte ein Benutzer beispielsweise einen bestimmten Dienst oder ein bestimmtes Protokoll, eine Telefonnummer oder ein spezielles Endgerät auswählen, so dass die Übermittlungseinrichtung auch das Verbinden zweier Geräten ermöglicht, die nicht automatisch erkannt wurden, oder aber persönliche Präferenzen des Benutzers berücksichtigt werden können. Die Konfiguration der Übermittlungseinrichtung könnte hierbei in besonders vorteilhafter Weise mittels einer speziellen insbesondere einer in der Übermittlungseinrichtung gespeicherten Software erfolgen.

Die Übermittlungseinrichtung könnte zusätzlich oder alternativ Ausgabeelemente und/oder Eingabeelemente für akustische Signale, insbesondere Lautsprecher und/oder Mikrophone, aufweisen. Somit wäre es möglich, den Benutzer durch ein akustisches Signal über Fehler, zum Beispiel in der Übermittlung der Daten, zu informieren. Auch wäre es möglich, mittels einer Spracherkennung akustische Befehle in die Übermittlungseinrichtung einzugeben.

Hinsichtlich einer besonders benutzerfreundlichen Ausgestaltung könnte die Übermittlungseinrichtung zudem sensorische Elemente, insbesondere Vibrationselemente, aufweisen. Hierdurch wäre abermals die Interaktion mit einem Benutzer gegeben, so könnte er beispielsweise mittels der sensorischen Elemente über bestimmte Zustände der Übermittlungseinrichtung informiert werden.
Im Rahmen einer besonders einfachen Energieversorgung könnte die Übermittlungseinrichtung mittels eines der Geräte mit Energie versorgt werden. Alternativ oder zusätzlich hierzu könnte die Übermittlungseinrichtung allerdings auch mittels einer externen Energiequelle, beispielsweise mittels eines internen oder externen Netzteils und/oder eines Akkumulators oder dergleichen, mit Energie versorgt sein. Es wäre allerdings auch jede andere Art der Energieversorgung denkbar, so beispielsweise Solarbetrieb, Goldcap-Kondensatoren, Brennstoffzellen oder dergleichen.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 15 nachgeordneten Patentansprüche, andererseits auf die nachfolgende Erläuterung eines bevorzugten Ausführungsbeispiels des erfindungsgemäßen Verfahrens und der erfindungsgemäßen Vorrichtung zu verweisen. In Verbindung mit der Erläuterung des bevorzugten Ausführungsbeispiels werden auch im Allgemeinen bevorzugte Ausgestaltungen und Weiterbildungen der Lehre erläutert.

In dem Ausführungsbeispiel ist das erste Gerät als Barcode-Scanner und ist das zweite Gerät als Mobiltelefon ausgestaltet. Die Übermittlungseinrichtung ist ein von den Geräten unabhängiges Modul, dass mittels Kabeln den Barcode-Scanner mit dem Mobiltelefon verbindet.

Beim Verbinden des Moduls mit dem Barcode-Scanner und dem Mobiltelefon sendet das Modul einen Attention-Befehl - AT-Befehl- an das Mobiltelefon und einen entsprechenden Befehl an den Barcode-Scanner. Aufgrund der Rückgabewerte auf die Befehle werden die Gerätetypen erkannt und das Modul ermittelt eine geeigneten Datenübertragung zwischen den Geräten.

Mittels des Barcode-Scanners werden nun Daten, nämlich ein Produkttyp, aus einem auf einem Produkt angebrachten Barcode ermittelt. Der Barcode-Scanner sendet die Daten an das Modul, welches die Daten mit einer Identifikationsnummer ergänzt. Diese ergänzten Daten werden mittels des Moduls in ein mit dem Mobiltelefon kompatibles Format übersetzt und an das Mobiltelefon übermittelt. Bei der Übermittlung der Daten an das Mobiltelefon wird das Mobiltelefon initialisiert, wobei eine SMS-Nachricht generiert wird, die den Produkttyp sowie die Identifikationsnummer enthält, und an einen Internetanbieter gerichtet ist.

Nachdem der Benutzer die Daten bestätigt hat, wird die SMS-Nachricht den Internetanbieter versendet. Der Internetanbieter ermittelt anhand der Daten, nämlich anhand des Produkttyps, aus einer Datenbank den günstigsten Preis für dieses spezielle Produkt. Mittels der Identifikationsnummer wird der Vorgang dem Account des Benutzers zugeordnet und zur späteren Abrechnung gespeichert. Der Internetanbieter übermittelt dann die Preisinformationen per SMS-Nachricht zurück an das Mobiltelefon des Benutzers. Der Benutzer kann nun anhand der ihm vorliegenden Informationen eine Kaufentscheidung treffen.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

## Patentansprüche

1. Verfahren zum uni- oder bidirektionalen Übermitteln von Daten zwischen mindestens zwei Geräten, wobei das eine Gerät die Daten sendet - erstes Gerät - und das andere Gerät die Daten empfängt - zweites Gerät - und wobei
- die Geräte mittels einer von den Geräten unabhängigen Übermittlungseinrichtung verbunden sind; und
- die Übermittlungseinrichtung mindestens eines der Geräte erkennt und einen kompatiblen Datenaustausch der Geräte ermöglicht, indem sie die Daten in für das zweite Gerät lesbare Daten umwandelt und an das zweite Gerät sendet; und
- das zweite Gerät über ein Übermittlungsmedium mit einer Datenverarbeitungseinrichtung kommuniziert, welche eine Empfangsadresse bzw. - telefonnummer hat,
**dadurch gekennzeichnet, dass**
- die Übermittlungseinrichtung die Daten durch Informationen ergänzt, an welche Empfangsadresse bzw. -telefonnummer die Daten gesendet werden; und
- die Übermittlungseinrichtung in Abhängigkeit von der Art des zweiten Gerätes die Art des Übermittlungsmediums auswählt.

2. Verfahren nach Anspruch 1, **dadurch gekennzeichnet, dass** die Übermittlungseinrichtung zum Erkennen des Geräts das Gerät ausliest und/oder mindestens einen Befehl, insbesondere einen Attention-Befehl, sendet.

3. Verfahren nach Anspruch 2, **dadurch gekennzeichnet, dass** die Übermittlungseinrichtung mittels des Rückgabewerts auf den Befehl das Gerät erkennt.

4. Verfahren nach einem der Ansprüche 1 bis 3, **dadurch gekennzeichnet, dass** das erkannte Gerät mittels der Übertragungseinrichtung initialisiert wird.

5. Verfahren nach einem der Ansprüche 1 bis 4, **dadurch gekennzeichnet, dass** das erste Gerät Daten erfasst und/oder speichert und/oder wiedergibt.

6. Verfahren nach Anspruch 5, **dadurch gekennzeichnet, dass** das erste Gerät die Daten an die Übermittlungseinrichtung sendet.

7. Verfahren nach einem der Ansprüche 1 bis 6, **dadurch gekennzeichnet, dass** die Übermittlungseinrichtung die Daten insbesondere durch eine IP-Adresse und/oder eine Telefonnummer und/oder eine E-Mail-Adresse oder dergleichen ergänzt.

8. Verfahren nach Anspruch 1, **dadurch gekennzeichnet, dass** als Übermittlungsmedium SMS, WAP, E-Mail oder dergleichen gewählt wird.

9. Verfahren nach Anspruch 8, **dadurch gekennzeichnet, dass** die Datenübertragung per Mobiltelefon und/oder PDA und/oder per Modem oder dergleichen erfolgt.

10. Verfahren nach Anspruch 9, **dadurch gekennzeichnet, dass** die Datenübertragung mittels WAP und/oder HTTP und/oder HTTPS und/oder SMTP oder FTP oder dergleichen erfolgt.

11. Verfahren nach einem der Ansprüche 8 bis 10, **dadurch gekennzeichnet, dass** die Daten durch die Datenverarbeitungseinrichtung ausgewertet und/oder durch Informationen ergänzt werden.

12. Verfahren nach Anspruch 1 bis 11 **dadurch gekennzeichnet, dass** die Daten und/oder die Informationen Produkte und Produkttypen und/oder Preisinformationen oder dergleichen umfassen.

13. Vorrichtung zum uni- oder bidirektionalen Übermitteln von Daten zwischen mindestens zwei Geräten zur Anwendung des Verfahrens nach einem der Ansprüche 1 bis 12, wobei das eine Gerät die Daten sendet - erstes Gerät - und das andere Gerät die Daten empfängt - zweites Gerät - und wobei
- die Geräte mittels einer von den Geräten unabhängigen Übermittlungseinrichtung verbunden sind; und
- die Übermittlungseinrichtung mindestens eines der Geräte erkennt und dass die Übermittlungseinrichtung einen kompatiblen Datenaustausch der Geräte ermöglicht, indem sie die Daten in für das zweite Gerät lesbare Daten umwandelt und an das zweite Gerät sendet; und
- das zweite Gerät über ein Übermittlungsmedium mit einer Datenverarbeitungseinrichtung kommuniziert, welche eine Empfangsadresse bzw. - telefonnummer hat,
**dadurch gekennzeichnet, dass**
- die Übermittlungseinrichtung Mittel aufweist, welche die Daten durch Informationen ergänzen, an welche Empfangsadresse bzw. -telefonnummer die Daten gesendet werden; und
- die Übermittlungseinrichtung Mittel aufweist, welche in Abhängigkeit von der Art des zweiten Gerätes die Art des Übermittlungsmediums auswählen.

14. Vorrichtung nach Anspruch 13, **dadurch gekennzeichnet, dass** das erste Gerät eine Kamera und/oder ein MP3-Player und/oder ein Scanner, insbesondere ein Barcode-Scanner, und/oder ein GPS-System und/oder ein Autoradio und/oder ein portables Messsystem und/oder ein Kartenlesesystem ist.

15. Vorrichtung nach Anspruch 13 oder 14, **dadurch gekennzeichnet, dass** das zweite Gerät ein PDA und/oder ein Computer, insbesondere ein Laptop, und/oder ein Mobiltelefon ist.

16. Vorrichtung nach einem der Ansprüche 13 bis 15, **dadurch gekennzeichnet, dass** die Übermittlungseinrichtung integraler Bestandteil eines Kabels ist.

17. Vorrichtung nach einem der Ansprüche 13 bis 16, **dadurch gekennzeichnet, dass** die Übermittlungseinrichtung die Geräte mittels Kabeln verbindet.

18. Vorrichtung nach einem der Ansprüche 13 bis 17, **dadurch gekennzeichnet, dass** die Übermittlungseinrichtung die Geräte mittels einer Funkverbindung und/oder einer Infrarotverbindung oder dergleichen verbindet.

19. Vorrichtung nach einem der Ansprüche 13 bis 18, **dadurch gekennzeichnet, dass** die Übermittlungseinrichtung Anzeige- und/oder Bedienelemente aufweist.

20. Vorrichtung nach einem der Ansprüche 13 bis 19, **dadurch gekennzeichnet, dass** die Übermittlungseinrichtung Ausgabeelemente und/oder Eingabeelemente für akustische Signale, insbesondere Lautsprecher und/oder Mikrophone, aufweist.

21. Vorrichtung nach einem der Ansprüche 13 bis 20, **dadurch gekennzeichnet, dass** die Übermittlungseinrichtung sensorische Elemente, insbesondere Vibrationselemente, aufweist.

22. Vorrichtung nach einem der Ansprüche 13 bis 21, **dadurch gekennzeichnet, dass** die Übermittlungseinrichtung mittels eines der Geräte mit Energie versorgt ist.

23. Vorrichtung nach einem der Ansprüche 13 bis 22, **dadurch gekennzeichnet, dass** die Übermittlungseinrichtung mittels einer externen Energiequelle, beispielsweise mittels eines internen oder externen Netzteils und/oder eines Akkumulators oder dergleichen, mit Energie versorgt ist.

## Claims

1. A method for uni/bidirectional data communication between at least two devices, the one device sending the data - first device - and the other device receiving the data - second device - and wherein
- the devices are connected by means of a communication module independent of the communication device; and
- the communication module recognizes at least one of the devices and permits compatible data exchange of the devices by converting the data into data readable by the second device, and sending the data to the second device; and
- the second device communicates with a data processing means via a transfer medium, the data processing means having a destination address or telephone number,
**characterized in that**
- the communication module supplements the data by information to which destination address or telephone number the data is to be sent; and
- the communication module selects the nature of the transfer medium based on the type of the second device.

2. The method as set forth in claim 1, **characterized in that** the communication module for recognizing the device reads out the device and/or transmits at least one instruction, particularly an attention command.

3. The method as set forth in claim 2, **characterized in that** the communication module recognizes the device from the value returned in response to the instruction.

4. The method as set forth in any of the claims 1 to 3, **characterized in that** the recognized device is initialized by means of the communication module.

5. The method as set forth in any of the claims 1 to 4, **characterized in that** the first device captures and/or stores and/or reproduces data.

6. The method as set forth in claim 5, **characterized in that** the first device sends the data to the communication module.

7. The method as set forth in any of the claims 1 to 6, **characterized in that** the communication module supplements the data particularly by an IP address and/or a telephone number and/or an e-mail address or the like.

8. The method as set forth in claim 1, **characterized in that** SMS, WAP, e-mail or the like is selected as the transfer medium.

9. The method as set forth in claim 8, **characterized in that** data communication is carried out via mobile telephone and/or PDA and/or modem or the like.

10. The method as set forth in claim 9, **characterized in that** data communication is carried out by means ofWAP and/or HTTP and/or HTTPS and/or SMTP or FTP or the like.

11. The method as set forth in any of the claims 8 to 10, **characterized in that** the data is analyzed, and/or supplemented by information, by the data processing means.

12. The method as set forth in any of the claims 1 to 11, **characterized in that** the data and/or the information comprises products and product types and/or price information or the like.

13. An apparatus for uni/bidirectional data communication between at least two devices for application of the method as set forth in any of claims 1 to 12, the one device sending the data - first device - and the other device receiving the data - second device - and wherein
- said devices are connected by means of a communication module independent of the devices; and
- the communication module recognizes at least one of the devices and permits compatible data exchange of the devices by converting the data into data readable by the second device and sending the data to the second device; and
- the second device communicates with data processing means via a transfer medium, the data processing means having a destination address or telephone number,
**characterized in that**
- the communication module supplements the data by information to which destination address or telephone number the data is to be sent; and
- the communication module selects the nature of the transfer medium based on the type of the second device.

14. The apparatus as set forth in claim 13, **characterized in that** the first device is a camera and/or an MP3 player and/or a scanner, more particularly a bar code scanner and/or a GPS system and/or a car radio and/or a portable sensing system and/or card reader system.

15. The apparatus as set forth in claim 13 or 14, **characterized in that** the second device is a PDA and/or a computer, particularly a laptop and/or a mobile telephone.

16. The apparatus as set forth in any of the claims 13 to 15, **characterized in that** the communication module is an integral part of a cable.

17. The apparatus as set forth in any of the claims 13 to 16, **characterized in that** the communication module connects the devices by wiring.

18. The apparatus as set forth in any of the claims 13 to 17, **characterized in that** the communication module connects the devices by a wireless and/or infrared link or the like.

19. The apparatus as set forth in any of the claims 13 to 18, **characterized in that** the communication module comprises display and/or control elements.

20. The apparatus as set forth in any of the claims 13 to 19, **characterized in that** the communication module comprises output and/or input elements for acoustic signals, particularly loudspeakers and/or microphones.

21. The apparatus as set forth in any of the claims 13 to 20, **characterized in that** the communication module comprises sensory elements, particularly vibration elements.

22. The apparatus as set forth in any of the claims 13 to 21, **characterized in that** the communication module is powered by means of one of the devices.

23. The apparatus as set forth in any of the claims 13 to 22, **characterized in that** the communication module is powered by means of an external energy supply, for example, by means of an internal or external power supply and/or a rechargeable battery or the like.

## Revendications

1. Procédé pour transmettre des données de manière unidirectionnelle ou bidirectionnelle, entre au moins deux appareils, où l'un des appareils envoie les données - premier appareil - et l'autre appareil réceptionne les données - deuxième appareil - et où
- les appareils sont reliés par une unité de transmission indépendantes des appareils ; et
- l'unité de transmission reconnaît au moins un des appareils et permet un échange de données compatible des appareils, en transformant les données en données lisibles pour le deuxième appareil et en les envoyant au deuxième appareil ; et
- le deuxième appareil communique via un médium de transmission avec une unité de traitement des données, qui a une adresse de destination ou- un numéro de téléphone,
**caractérisé en ce que**
- l'unité de transmission complète les données par des informations, les données sont envoyées aux adresses de réception ou numéros de téléphones
- l'unité de transmission choisit le type de médium de transmission indépendamment du type du deuxième appareil.

2. Procédé selon la revendication 1, **caractérisé en ce que** l'unité de transmission lit l'appareil pour reconnaître l'appareil et/ou envoie au moins un ordre, en particulier un ordre d'attention.

3. Procédé selon la revendication 2, **caractérisé en ce que** l'unité de transmission reconnaît l'appareil au moyen de la valeur de retour à partir de l'ordre.

4. Procédé selon l'une des revendications 1 à 3, **caractérisé en ce que** l'appareil reconnu est initialisé au moyen de l'unité de transmission.

5. Procédé selon l'une des revendications 1 à 4, **caractérisé en ce que** le premier appareil saisit des données et/ou les enregistre et/ou les transmet.

6. Procédé selon la revendication 5, **caractérisé en ce que** le premier appareil envoie les données à l'unité de transmission.

7. Procédé selon l'une des revendications 1 à 6, **caractérisé en ce que** l'unité de transmission complète les données en particulier par une adresse IP et/ou un numéro de téléphone et/ou une adresse email ou identique.

8. Procédé selon la revendication 1, **caractérisé en ce que** comme médium de transmission est choisi SMS, WAP, Email ou identique.

9. Procédé selon la revendication 8, **caractérisé en ce que** la transmission de données se produit par téléphone portable et/ou PDA et/ou modem ou identique.

10. Procédé selon la revendication 9, **caractérisé en ce que** la transmission de données se produit au moyen de WAP et/ou http et/ou HTTPS et/ou SMTP et/ou FTP ou identique.

11. Procédé selon l'une des revendications 8 à 10, **caractérisé en ce que** les données sont exploitées par l'unité de transmission de données et/ou sont complétées par des informations.

12. Procédé selon les revendications 1 à 11, **caractérisé en ce que** les données et/ou les informations comprennent des produits et des types de produits et/ou des informations de prix.

13. Dispositif pour transmettre des données de manière unidirectionnelle ou bidirectionnelle entre au moins deux appareils pour application du procédé selon l'une des revendications 1 à 12, où l'un appareil envoie les données - premier appareil- et l'autre appareil réceptionne les données - deuxième appareil - et où
- les appareils sont reliés par une unité de transmission indépendantes des appareils ; et
- l'unité de transmission reconnaît au moins un des appareils et permet un échange de données compatible des appareils, en transformant les données en données lisibles pour le deuxième appareil et en les envoyant au deuxième appareil ; et
- le deuxième appareil communique via un médium de transmission avec une unité de traitement des données, qui a une adresse de destination ou- un numéro de téléphone,
**caractérisé en ce que**
- l'unité de transmission présente des moyens, qui complètent les données par des informations, les données sont envoyées aux adresses de réception ou numéros de téléphones
- l'unité de transmission présente des moyens, qui choisissent le type de médium de transmission dépendamment du type du deuxième appareil.

14. Procédé selon la revendication 13, **caractérisé en ce que** le premier appareil est un appareil photo et/ou un lecteur MP3 et/ou un scanner, en particulier un scanner code barre, et/ou un système de GPS et/ou une autoradio et/ou un système de mesure portable et/ou un système de lecture de carte.

15. Procédé selon la revendication 13 ou 14, **caractérisé en ce que** le deuxième appareil est un PDA et/ou un ordinateur, en particulier un ordinateur portable, et/ou un téléphone portable.

16. Procédé selon l'une des revendications 13 à 15, **caractérisé en ce que** l'unité de transmission est un composant intégral d'un câble.

17. Procédé selon l'une des revendications 13 à 16, **caractérisé en ce que** l'unité de transmission lie les appareils au moyen de câbles.

18. Procédé selon l'une des revendications 13 à 17, **caractérisé en ce que** l'unité de transmission lie les appareils au moyen de connexion sans fil et/ou connexion infrarouge ou identique.

19. Procédé selon l'une des revendications 13 à 18, **caractérisé en ce que** l'unité de transmission présente des éléments d'affichage et/ou de commande.

20. Procédé selon l'une des revendications 13 à 19, **caractérisé en ce que** l'unité de transmission présente des élément de sortie et/ou des éléments d'entrée pour des signaux acoustiques en particulier des hauts-parleurs et/ou microphones.

21. Procédé selon l'une des revendications 13 à 20, **caractérisé en ce que** l'unité de transmission présente des éléments sensoriels en particulier des éléments de vibration.

22. Procédé selon l'une des revendications 13 à 21, **caractérisé en ce que** l'unité de transmission est alimenté en énergie au moyen d'un des appareils.

23. Procédé selon l'une des revendications 13 à 22, **caractérisé en ce que** l'unité de transmission est alimenté en énergie au moyen d'une source d'énergie externe, par exemple au moyen d'un bloc d'alimentation interne ou externe et/ou un accumulateur ou identique.
